(19) Europäisches Patentamt

European Patent Office

Office européen des brevets

(11) **EP 1 256 138 B1**

(12) **EUROPEAN PATENT SPECIFICATION**

(45) Date of publication and mention
of the grant of the patent:
**30.07.2003 Bulletin 2003/31**

(51) Int Cl.[7]: **H01M 4/96**

(86) International application number:
**PCT/GB01/00458**

(21) Application number: **01904075.7**

(22) Date of filing: **06.02.2001**

(87) International publication number:
**WO 01/059859 (16.08.2001 Gazette 2001/33)**

(54) **ANODE STRUCTURE WITH A CARBON-BASED COMPONENT HAVING LITTLE RESISTANCE TO CORROSION**

ANODENSTRUKTUR MIT KOHLENSTOFFHALTIGER KOMPONENTE, DIE EINEN NIEDRIGEN KORROSIONWIDERSTAND BESITZT

STRUCTURE D'ANODE DOTEE D'UN COMPOSANT A BASE DE CARBONE PRESENTANT UNE FAIBLE RESISTANCE A LA CORROSION

(84) Designated Contracting States:
**AT BE CH CY DE DK ES FI FR GB GR IE IT LI LU MC NL PT SE TR**

(30) Priority: **08.02.2000 GB 0002764**

(43) Date of publication of application:
**13.11.2002 Bulletin 2002/46**

(73) Proprietors:
• **JOHNSON MATTHEY PUBLIC LIMITED COMPANY**
**London SW1Y 5BQ (GB)**
• **BALLARD POWER SYSTEMS INC.**
**Burnaby, British Columbia V5J 5J9 (CA)**

(72) Inventors:
• **GASCOYNE, John Malcolm**
**High Wycombe, Bucks HP14 4BB (GB)**
• **KNIGHTS, Shanna, Denine**
**Burnaby, British Columbia V5G 1X2 (CA)**

• **RALPH, Thomas, Robinson**
**Reading RG30 2QJ (GB)**
• **TAYLOR, Jared, Luke**
**Davis, CA 95616 (US)**
• **WILKINSON, David, Pentreath**
**North Vancouver, British Columbia V7R 1W (CA)**

(74) Representative: **Wishart, Ian Carmichael**
**Patents Department**
**Johnson Matthey Technology Centre**
**Blount's Court**
**Sonning Common**
**Reading, RG4 9NH (GB)**

(56) References cited:
**EP-A- 0 569 062          EP-A- 1 045 467**
**US-A- 4 738 872          US-A- 4 908 198**

• **PATENT ABSTRACTS OF JAPAN vol. 018, no. 540 (E-1616), 14 October 1994 (1994-10-14) -& JP 06 196173 A (MITSUBISHI ELECTRIC CORP), 15 July 1994 (1994-07-15)**

## Description

The present invention relates to a novel anode structure comprising a substrate and a first carbon-based component that shows little or no resistance to corrosion, such that when said anode structure is incorporated into a membrane electrode assembly, the membrane electrode assembly is substantially tolerant to incidences of cell reversal.

A fuel cell is an energy conversion device that efficiently converts chemical energy into electrical energy by electrochemically combining either hydrogen, stored as a gas, or methanol stored as a liquid or gas, with oxygen, normally in the form of air, to generate electrical power. At their fundamental level fuel cells comprise electrochemical cells formed from a solid or liquid electrolyte and two electrodes, the anode side and cathode side, at which the desired electrochemical reactions take place. In the fuel cell the hydrogen or methanol is oxidised at the anode side and the oxygen is reduced at the cathode side to generate the electrical power. Normally in fuel cells the reactants are in gaseous form and have to be diffused into the anode and cathode structures. The electrode structures are therefore specifically designed to be porous to gas diffusion in order to optimise the contact between the reactants and the reaction sites in the electrode to maximise the reaction rate. Efficient removal of the reaction products from the electrode structures is also important. In cases where liquid reactants and products are present the electrode structures often have to be tailored to efficiently feed reactants to and remove products from the reaction sites. The electrolyte also has to be in contact with both electrodes and in fuel cell devices may be acidic or alkaline, liquid or solid in nature. The proton exchange membrane fuel cell (PEMFC), however, is the most likely type of fuel cell to find wide application as an efficient and low emission power generation technology for a range of markets, such as in a range of stationary, residential and portable power generation devices and as an alternative to the internal combustion engine for transportation. In the PEMFC, whether hydrogen or methanol fuelled, the electrolyte is a solid proton-conducting polymer membrane, commonly based on perfluorosulphonic acid materials.

In the PEMFC the combined laminate structure formed from the membrane and the two electrode structures is known as a membrane electrode assembly (MEA). The MEA typically comprises several layers, but in general can be considered to comprise five layers which are dictated by their function. On either side of the membrane an anode and cathode electrocatalyst is incorporated to increase the rates of the desired electrode reactions. In contact with the electrocatalyst containing layers, on the opposite face to that in contact with the membrane, are the anode and cathode gas diffusion layers. The anode gas diffusion layer is designed to be porous. This allows the reactant hydrogen or methanol to enter from the face of the layer exposed to the reactant fuel supply. The reactant then diffuses through the thickness of the gas diffusion layer to the layer containing the electrocatalyst, which is usually platinum metal based, to maximise the electrochemical oxidation of hydrogen or methanol. The anode electrocatalyst layer is also designed to comprise some level of proton conducting electrolyte in contact with the same electrocatalyst reaction sites. With acidic electrolyte types the product of the anode reaction is protons and these can then be efficiently transported from the anode reaction sites through the electrolyte to the cathode layers. The cathode gas diffusion layer is also designed to be porous and to allow oxygen or air to enter the layer and diffuse through to the electrocatalyst layer reaction sites. The cathode electrocatalyst combines the protons with oxygen to produce water and is also designed to comprise some level of the proton conducting electrolyte in contact with the same electrocatalyst reaction sites. Product water then has to diffuse out of the cathode structure. The structure of the cathode has to be designed such that it enables the efficient removal of the product water. If water builds up in the cathode it becomes more difficult for the reactant oxygen to diffuse to the reactant sites, and thus the performance of the fuel cell decreases. In the case of methanol fuelled PEMFCs, additional water is present due to the water contained in the methanol, which can be transported through the membrane from the anode to the cathode side. The increased quantity of water at the cathode requires removal. However it is also the case with proton conducting membrane electrolytes, that if too much water is removed from the cathode structure, the membrane can dry out resulting in a significant decrease in the performance of the fuel cell.

The complete MEA can be constructed by several methods. The electrocatalyst layers can be bonded to one surface of the gas diffusion layer to form what is known as a catalysed gas diffusion layer or gas diffusion electrode. Two gas diffusion electrodes can be combined with the solid proton-conducting membrane to form the MEA. Alternatively, two porous uncatalysed gas diffusion layers can be combined with a solid proton-conducting polymer membrane that is catalysed on both sides to form the MEA. Further, one gas diffusion electrode can be combined with one uncatalysed gas diffusion layer and a solid proton-conducting polymer membrane that is catalysed on the side facing the gas diffusion layer to form the MEA.

The materials typically used in the fabrication of the uncatalysed gas diffusion layers of the MEA comprise high density materials such as rigid carbon fibre paper (e.g. Toray TGP-H-60 or TGP-H-90 from Toray Industries, Japan) or woven carbon cloths, such as Zoltek PWB-3 (Zoltek Corporation, 3101 McKelvey Road, St. Louis, Missouri 63044, USA). Layers such as these are usually modified with a particulate material either embedded within the fibre network or coated on to the large planar surfaces, or a combination of both. Typically these particulate materials comprise a carbon black and polymer mix. The particulate carbon black material is, for example, an oil furnace black such as Vulcan XC72R (from Cabot Chemicals, Billerica, Ma, USA) or an acetylene black such as Shawinigan (from Chevron Chemicals, Houston, Texas, USA). The polymer most frequently used is polytetrafluoroethylene (PTFE). The coating, or embedding, is carried out in order to improve the water management properties, improve gas diffusion characteristics, to provide a continuous surface on which to apply the catalyst layer and to improve the electrical conductivity. More recently, electrode structures based on gas diffusion layers comprising a non-woven network of carbon fibres (carbon fibre structures such as Optimat 203, from Technical Fibre Products, Kendal, Cumbria, UK) with a particulate material embedded within the fibre network as disclosed in EP 0 791 974 have shown comparable performances to structures based on carbon fibre paper or cloth.

The electrocatalyst materials for the anode and cathode structures typically comprise precious metals, in particular platinum, as these have been found to be the most efficient and stable electrocatalysts for all low-temperature fuel cells such as the PEMFC. Platinum is employed either on its own as the only electrocatalytic metal or in combination with other precious metals or base metals. The platinum based electrocatalyst is provided as very small particles ($\sim$20-50Å) of high surface area, which are usually distributed on and supported by larger macroscopic conducting carbon particles to provide a desired catalyst loading. Conducting carbons are the preferred materials to support the catalyst. Particulate carbon black materials typically employed include Vulcan XC72R and Shawinigan. It is also possible that the platinum based electrocatalyst may not incorporate a support, and in this case it is referred to as an unsupported Pt electrocatalyst.

Each MEA in the PEMFC is sandwiched between electrically conducting flow field plates which are conventionally based on carbon and contain channels that feed the MEA with the reactants and through which the products are removed. Since each MEA typically delivers 0.6 -0.7 V, usually between 10 to 100 such MEAs are located between flow field plates to form stacks. These stacks are combined electrically in series or parallel to give the desired power output for a given application.

Recently it has been observed that during prolonged operation some cells in large stacks can go into an undesired condition known as cell reversal. This is shown by the cell potential becoming negative rather than the positive value associated with normal PEMFC operation. Such cell reversals can be due to depletion in the concentration of the reactants at the cathode or anode sides, which can be caused by a number of factors such as restricted gas flow due to blocked flow fields or poor water distribution in the MEA. Allied to this in situations where a fast dynamic response is required, such as in transportation applications, it is possible that the gas flow cannot respond quickly enough to sustain the current demand. Further, if one cell in a stack shows cell reversal, adjacent cells in the stack may also overheat, resulting in cell reversal.

If the cell reversal is due to a restricted oxygen concentration at the electrocatalyst sites in the cathode then, to sustain the flow of current, hydrogen is produced at the cathode,

$$2\,H^+ + 2\,e^- \rightarrow H_2$$

Since hydrogen production at the cathode is very facile at the platinum based electrocatalysts typically employed, the electrode potential is usually only slightly more negative than that for hydrogen oxidation at the anode. The result is that at normal operating current densities the cell voltage is normally slightly negative e. g. -0.1 V. This type of cell reversal does raise safety and durability concerns since hydrogen is being produced in the oxidant side of the cell, a significant quantity of heat is generated and water is no longer being produced at the cathode. This water helps to sustain membrane hydration especially at the membrane-anode interface since it promotes the back-diffusion of water.

The major problem occurs, however, if the hydrogen concentration is restricted at the anode side. In this case to sustain the flow of current water electrolysis and carbon corrosion can occur,

$$2\,H_2O \rightarrow O_2 + 4\,H^+ + 4\,e^-$$

$$C + 2H_2O \rightarrow CO_2 + 4\,H^+ + 4\,e^-$$

Since both electrode reactions occur at more positive electrode potentials than oxygen reduction at the cathode, again, the cell voltage is negative, but in this case the cell voltage may be as high as -0.8 V at typical operating current densities. While carbon corrosion is favoured over water electrolysis thermodynamically, the electrochemical kinetics of water electrolysis are sufficiently facile at the platinum based electrocatalysts typically employed in the PEMFC that initially water electrolysis principally sustains the current. There is only a small contribution from corrosion of the carbon components in the anode to the cell current. If, however, the anode catalyst becomes deactivated for water electrolysis or if the water concentration at the electrocatalyst sites in the anode becomes significantly depleted, the water electrolysis current is gradually replaced by increased rates of carbon corrosion. In the case of carbon corrosion water need only be present in the vicinity of the relevant, abundant carbon surfaces. During this period the cell voltage becomes more negative (i.e. the anode potential becomes more positive) to provide the necessary driving force for carbon corrosion. This in turn increases the driving force for the water electrolysis reaction. The result, if cell reversal is prolonged, may be irreversible damage to the membrane and catalyst layers due to excessive dehydration and local heating. Further, the catalyst carbon support in the anode structure corrodes, with eventual dissolution of the platinum based catalyst from the support and the anode gas diffusion layer may become degraded due to corrosion of the carbon present in the gas diffusion layer structure. In cases where the bipolar flow field plates are based on carbon the anode flow field plate may also be subjected to significant carbon corrosion, resulting in surface pitting and damage to the flow field pattern.

Therefore it would be a significant advantage if the MEA could be protected from the effects of cell reversal should a cell go into cell reversal. This is the problem the present inventors have set out to address.

Accordingly, the present invention provides an anode structure for a fuel cell having an operating temperature below about 250°C, said anode structure comprising a substrate and a first carbon-based component comprising a first carbon material, and a second carbon component characterised in that said first carbon-based component is not a support for an electrocatalyst and shows little or no resistance to corrosion and said second carbon component is substantially more resistant to corrosion than said first carbon-based component. When said anode structure of the present invention is incorporated into a membrane electrode assembly (MEA), said MEA is substantially tolerant to incidences of cell reversal.

The term anode structure in the context of the present invention means any of the functional components and structures associated with the anode side of the MEA through which a fuel is either transported or reacted, i.e. within the gas diffusion and electrocatalyst containing layers on the anode side of the membrane. The practical embodiments of the term anode structure as herein defined include:

(i) A gas diffusion layer;
(ii) An electrocatalyst containing layer bonded to a gas diffusion layer - also referred to as a gas diffusion electrode or a catalyst coated gas diffusion layer;
(iii) An electrocatalyst containing layer bonded to the proton conducting membrane - also referred to as a catalyst coated membrane.

In the context of the present invention, the term substrate is used to refer to a gas diffusion layer or a polymer membrane electrolyte.

The first carbon-based component may consist entirely of a first carbon material or may comprise a first carbon material and one or more other materials which may for example be present to promote the corrosion rate of the first carbon material or to act as a binder. The one or more other materials which may be present in the first carbon-based component include polymeric materials, for example a proton conducting polymer electrolyte, such as Nafion, or a non-proton conducting polymer, for example PTFE. The first carbon-based component present in the anode structure (whether solely of first carbon material or of first carbon material plus other material(s)) shows little or no resistance to corrosion, and therefore when used in an electrochemical cell that has entered a period of cell reversal, the first carbon-based component will be corroded in preference to any other carbon also present in the anode structure, for example a carbon support for the electrocatalyst. In other words, the first carbon-based component is acting as a sacrificial carbon component. This will protect any further carbon present in the anode from corrosion and thus maintain its desired function when the cell returns to normal operation. For instance this will prevent the carbon black in the electrocatalyst carbon support and the carbon in the gas diffusion layer from corroding. Consequently the anode electrocatalyst and the anode gas diffusion layer will be protected from the effects of cell reversal, allowing the cell to function without having suffered significant irreversible performance decay when the cell reverts to normal fuel cell operation after the cell reversal incident. To promote the corrosion rate of the first carbon material used in the first carbon-based component, the first carbon material may be pre-treated with a suitable form of the proton conducting membrane electrolyte prior to incorporation into the anode structure. Impregnating the first carbon material with proton conducting membrane electrolyte will promote the corrosion rate of the first carbon-based component by providing an efficient conduction pathway for the protons formed in the carbon corrosion reaction to the membrane of the MEA.

Further, the first carbon-based component allows the membrane and catalyst layer in the MEA to function without having suffered significant irreversible performance decay when the cell reverts to normal fuel cell operation after the cell reversal incident. This is because corrosion of the first carbon-based component helps sustain the current density at a less negative cell voltage, corresponding to a less positive anode potential. At less positive anode potentials the driving force for irreversible damage to the membrane and catalyst layers is reduced.

As a general rule the corrosion resistance of carbons is related to the degree of the graphitic nature within the structure. The more graphitic the structure of the carbon the more resistant the carbon is to corrosion. The typical carbon blacks employed in fuel cells, either as the electrocatalyst support or in the gas diffusion layer, therefore tend to be those that are more highly graphitic in nature as the environment particularly at the cathode is very oxidising. It is envisaged that the first carbon material will be chosen from the group of carbons that are much less graphitic, that is, much more amorphous than the typical carbon materials employed in the fuel cell. One measure that can be taken as an indication of the corrosion resistance of carbon is provided by the BET surface area measured using nitrogen, as this detects the microporosity and mesoporosity typically found in amorphous carbon structures. For example Vulcan XC72R, Shawinigan and graphitised Vulcan XC72R are typical semi-graphitic/graphitic carbon blacks employed in fuel cells. Vulcan XC72R has a surface area of 228 $m^2g^{-1}$. This contrasts with a surface area of 86 $m^2g^{-1}$ for graphitised Vulcan XC72R. The much lower surface area as a result of the graphitisation process reflects a loss in the more amorphous microporosity in Vulcan XC72R. The microporosity is commonly defined as the surface area contained in the pores of diameter less than 2 nm. Shawinigan has a surface area of 55 $m^2g^{-1}$, and BET analysis indicates a low level of carbon micrporosity available in this support for corrosion. This contrasts with the much higher BET surface area of, for example, Black Pearls 2000 (1536 $m^2g^{-1}$) reflecting in this case a high degree of microporosity in this carbon black that can corrode. Carbon blacks with BET surface areas in excess of 350 $m^2g^{-1}$, such as BP2000, could be employed as the first carbon material in the first carbon-based component in the anode structure of the PEMFC.

There are other carbons which also have high BET surface areas in excess of 350 $m^2g^{-1}$, such as those classified as activated carbons. These carbon are usually derived from the carbonisation of vegetable matter (typically wood, peat or coconut husks) where the carbon is generally amorphous in character and there is a range of possible pore sizes from micropores to larger mesopores and macropores. Typical examples of these activated carbons are those produced under the general trade name Norit (Norit Americas Inc., Atlanta, GA, USA) and Pica (Pica, 92300 Levallois, France). Such carbons could also be employed as the first carbon material in the first carbon-based component in the anode structure of the PEMFC.

Another indication of the corrosion resistance may be demonstrated by the carbon inter-layer separation $d_{002}$ measured from the x-ray diffractograms. Synthetic graphite (essentially pure graphite) has a spacing of 3.36Å compared with 3.45Å for Vulcan XC72R (graphitised), 3.50Å for Shawinigan, and 3.64Å for Vulcan XC72R, with the higher inter-layer separations reflecting the decreasing graphitic nature of the carbon and the decreasing order of corrosion resistance. Thus, a first carbon material with an inter-layer separation of greater that 3.65Å may be suitable for use in the first carbon-based component of the present invention. However, many carbons that show poor resistance to corrosion (and therefore may be of use in the first carbon-based component of the present invention) are amorphous in nature and therefore no inter-layer separation measurement can be obtained.

It is also possible that the first carbon-based component may comprise a first carbon material which intrinsically demonstrates a reasonably high resistance to corrosion but which is treated in such a manner, for example by coating with a proton conducting electrolyte, that the formed first carbon-based component as a whole shows little or no resistance to corrosion.

The rate of carbon corrosion may be determined by appropriate adaptation of the following procedure which is suitable for a liquid acid electrolyte fuel cell, for example a phosphoric acid fuel cell. A complete cell is assembled by inserting an anode structure (previously weighed) of the invention and a reference electrode (for example a dynamic hydrogen reference electrode) into a liquid electrolyte. The cell was left until the test temperature is reached (e.g. 180°C) and for the open circuit voltage (OCV) of the anode structure to stabilise. The cell was activated and as soon as the potential of the working electrode reached 1 volt, current readings were taken over a given time period. The cell was dismantled and the anode structure reweighed. The log (corrosion current) was plotted against log(time) and extrapolated to 100 minutes. The corrosion rate is expressed as current per unit weight of carbon ($\mu Amg^{-1}C$) after 100 minutes at 1 volt. Data for the corrosion rates of a number of carbons in phosphoric acid fuel cells may be found in Catalysis Today, 7 (1990) 113-137. Although the actual carbon corrosion rates will be dependent on the particular environment in which the anode structure is placed, the relative rates of the various carbons will essentially remain similar.

The second carbon component may be a carbon support for an electrocatalyst or a carbon fill for a gas diffusion substrate.

One embodiment of the present invention provides a gas diffusion layer which comprises a first carbon-based component. The first carbon-based component may either be embedded within the gas diffusion layer or applied as a coating to one or both surfaces, or a mixture of both. To prepare a gas diffusion layer according to the invention the first carbon-based component may be mixed with a carbon black filler material typically employed to coat or fill the carbon paper, cloth or non-woven fibre web substrates employed in the PEMFC to produce the anode structure of the invention in the form of a gas diffusion layer. To promote the corrosion rate of the first carbon material used in the first carbon-based component, the first carbon material may be pre-treated or the resultant anode gas diffusion layer subsequently treated with a suitable form of the proton conducting membrane electrolyte prior to incorporation in the MEA. The carbon black filler material usually comprises a particulate carbon and a polymer, the carbon suitably being in the form of a powder. The carbon powder may be any of the materials generally designated as carbon black such as acetylene blacks, furnace blacks, pitch coke based powders and graphitised versions of such materials. Suitably also both natural and synthetic graphites may be used in this application. Such materials may be used either alone or in combination. The particulate carbon, or carbons, in the fill are held together by one or more polymers. The polymeric materials used contribute to the essential electrode structural properties such as pore size distribution, hydrophobic/hydrophilic balance and physical strength of the gas diffusion layer. Examples of such polymers include polytetrafluoroethylene (PTFE), fluorinated ethylene-propylene (FEP), polyvinylidene difluoride (PVDF), Viton A, polyethylene, polypropylene, ethylene-propylene. The preferred polymer is PTFE or FEP.

In addition other modifier materials and catalyst materials, which are not electrocatalysts, may be added to the carbon black filler such as disclosed in WO 00/55933 (Johnson Matthey).

Furthermore, the first carbon-based component may be applied to an anode gas diffusion layer that has previously been coated or filled with typical carbon filler materials. To promote the corrosion rate of the first carbon material used in the first carbon-based component it may be pre-treated with the suitable form of the proton conducting membrane electrolyte. It is envisaged that in the MEA formed using the resultant anode gas diffusion layer, the first carbon-based component within the anode layer may face either the electrocatalyst layer or the anode flow field plate. In this anode structure of the invention the anode gas diffusion layer must have sufficient electrical conductivity such that on removal of the first carbon-based component during cell reversal, the remaining anode layer does not have a significantly lower electrical conductivity. Typical substrates that could be employed include those based on Toray carbon fibre paper and Zoltek PWB-3 carbon cloth, which without a carbon coating or fill have through plane specific electrical resitivities of below 0.15 $\Omega$cm.

A second embodiment of the present invention provides a gas diffusion electrode which comprises a first carbon-based component. The first carbon-based component may be admixed with an electrocatalyst component and a polymeric material and the two applied to a gas diffusion layer as a single admixed layer, or the first carbon-based component and the electrocatalyst component may be applied as separate layers, each separate layer also incorporating a polymeric material. Alternatively, there could be a combination of separate and mixed layers. The polymeric material may be a soluble form of the proton conducting membrane electrolyte, or may be any of a wide range of polymeric materials used to contribute to the structural and diffusional properties. Examples of such polymers include polytetrafluoroethylene (PTFE), fluorinated ethylene-propylene (FEP), polyvinylidene difluoride (PVDF), Viton A, polyethylene, polypropylene, ethylene-propylene. The preferred polymer is PTFE or FEP. To promote the corrosion rate of the first carbon material used in the first carbon-based component the first carbon material may be pre-treated with a suitable form of the proton conducting membrane electrolyte prior to incorporation into the anode electrocatalyst mixture.

The mixture of first carbon-based component and anode electrocatalyst can be deposited onto the typical range of gas diffusion layers employed in PEMFCs to produce the anode structure of the invention in the form of a gas diffusion electrode.

Typical anode electrocatalysts employed in the PEMFC may be, for example, a precious metal or a transition metal as the metal or metal oxide, either unsupported or supported in a dispersed form on a carbon support; an organic complex, in the form of a high surface area finely divided powder or fibre, or a combination of these options. An example of a suitable electrocatalyst material is described in EP 0731520. Particularly suitable electrocatalysts are unsupported platinum (Pt) or alloys or mixtures of platinum/ruthenium (PtRu) and carbon supported Pt or PtRu. The PtRu electrocatalyst exhibits a higher level of tolerance to CO and $CO_2$ when they are present in the fuel stream than Pt electrocatalysts.

Specific examples of this embodiment may be prepared according to the procedure described hereinafter.

A third embodiment of the present invention provides a catalyst coated membrane which comprises a first carbon-based component. The first carbon-based component may be admixed with an electrocatalyst component and a polymeric material and the two applied to a membrane electrolyte as an admixed single layer, or the first carbon-based component and the electrocatalyst component may be applied as separate layers, each separate layer also incorporating a polymeric material. Alternatively, there could be a combination of separate and mixed layers. The polymeric material may be a soluble form of the proton conducting membrane electrolyte, or may be any of a wide range of polymeric materials used to contribute to the structural and diffusional properties. Examples of such polymers include polytetrafluoroethylene (PTFE), fluorinated ethylene-propylene (FEP), polyvinylidene difluoride (PVDF), Viton A, polyethylene, polypropylene, ethylene-propylene. The preferred polymer is PTFE or FEP. To promote the corrosion rate of the carbon in the first carbon component, the carbon may be pre-treated with a suitable form of the proton conducting membrane electrolyte prior to incorporation into the anode electrocatalyst mixture.

The mixture of first carbon-based component and anode electrocatalyst can be deposited onto the solid membrane electrolyte to produce the anode structure of the invention in the form of a catalyst coated membrane. Subsequent compression of the anode and cathode catalyst coated membrane to the typical gas diffusion layers employed in PEMFCs, or hot pressing of anode and cathode catalyst coated gas diffusion layers to the solid proton conducting membrane electrolyte forms the complete MEA.

Typical anode electrocatalysts employed in the PEMFC are as described hereinbefore.

The proton conducting polymers suitable for use in the present invention in any of the embodiments may include, but are not limited to:

1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups, phosphoric acid groups or derivatives of phosphoric acid groups and/or mixtures of these groups. Perfluorinated polymers include Nafion®, Flemion® and Aciplex® commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Chemical Industry respectively. Other polymers include those covered in U.S. Patent 5,595,676 (Imperial Chemical Industries plc) and U.S. Patent 4,940,525 (Dow Chemical Co.)

2) Perfluorinated or partially fluorinated polymers containing aromatic rings such as those described in WO 95/08581, WO 95/08581 and WO 97/25369 (Ballard Power Systems) which have been functionalised with $SO_3H$, $PO_2H_2$, $PO_3H_2$, $CH_2PO_3H_2$, COOH, $OSO_3H$, $OPO_2H_2$, $OPO_3H_2$. Also included are radiation or chemically grafted perfluorinated polymers, in which a perfluorinated carbon chain, for example, PTFE, fluorinated ethylene-propylene (FEP), tetrafluoroethylene-ethylene (ETFE) copolymers, tetrafluoroethylene-perfluoroalkoxy (PFA) copolymers, poly (vinyl fluoride) (PVF) and poly (vinylidene fluoride) (PVDF) is activated by radiation or chemical initiation in the presence of a monomer, such as styrene, which can be functionalised to contain an ion exchange group.

3) Fluorinated polymers such as those disclosed in EP 0 331 321 and EP 0345 964 (Imperial Chemical Industries plc) containing a polymeric chain with pendant saturated cyclic groups and at least one ion exchange group which is linked to the polymeric chain through the cyclic group.

4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).

5) Nonfluorinated polymers include those disclosed in U.S. Patent 5,468,574 (Dais Corporation) for example hydrocarbons such as styrene-(ethylene-butylene)-styrene, styrene-(ethylene-propylene)-styrene and acrylonitrile-butadiene-styrene co- and terpolymers where the styrene components are functionalised with sulphonate, phosphoric and/or phosphonic groups.

6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.

7) Any of the above polymers which have the ion exchange group replaced with a sulphonyl chloride ($SO_2Cl$) or sulphonyl fluoride ($SO_2F$) group rendering the polymers melt processable. The sulphonyl fluoride polymers may form part of the precursors to the ion exchange membrane or may be arrived at by subsequent modification of the ion exchange membrane. The sulphonyl halide moieties can be converted to a sulphonic acid using conventional techniques such as, for example, hydrolysis.

In the direct methanol fuel cell (DMFC) it is methanol that is oxidised at the anode during normal fuel cell operation,

$$CH_3OH + H_2O = CO_2 + 6H^+ + 6e^-$$

Fuel starvation can also be a particular problem in the methanol fuelled DMFC. The methanol can be blocked from the electrocatalyst sites by the significant quantities of water that are present in the aqueous methanol fuel mixture and by the carbon dioxide gas that is generated by the electro-oxidation of the methanol. Consequently the problems of cell reversal due to fuel starvation in the anode structure, which are identical to those outlined for the $H_2$ fuelled PEMFC, can be a problem in the DMFC. The use of a first carbon-based component in the anode structure of the DMFC offers a benefit. Just as in the $H_2$ fuelled PEMFC, it protects the vital carbon components in the anode from corrosion, by undergoing preferential corrosion, and the membrane and catalyst layers from excessive dehydration and irreversible damage by helping to sustain the current density at less positive anode potentials. The use of a first carbon-based component in the anode structure of the DMFC allows the MEA to provide a performance that is not significantly reduced after a cell reversal incident. However, the problem of carbon corrosion in the direct methanol fuel cell is not likely to be as great a problem as in the $H_2$-fuel cell due to the increased amount of water at the anode, and thus any cell reversal current should be consumed in electrolysis reactions.

A further aspect of the present invention provides an MEA which comprises an anode structure according to the present invention.

A still further aspect of the invention provides a fuel cell comprising an MEA according to the present invention. A further aspect provides a fuel cell comprising an anode structure according to the present invention.

While the present anode structures have been described for use in solid polymer fuel cells, such as the proton exchange membrane and direct methanol fuel cells, it is anticipated that they would be useful in other fuel cells, as well. In this regard, "fuel cells" refers to any fuel cell having an operating temperature below about 250°C. The present anode structures are preferred for acid electrolyte fuel cells, which are fuel cells comprising a liquid or solid acid electrolyte, such as phosphoric acid, solid polymer electrolyte, and direct methanol fuel cells. The present anode structures are particularly preferred for solid polymer electrolyte fuel cells.

Specific examples of a gas diffusion layer (embodiment two) according to the present invention may be prepared in the following manner.

A particulate catalyst component, containing a first carbon-based component is provided by dispersing 30 weight parts of a high surface area carbon black (the first carbon-based component, which may be Black pearls 2000 or PICACTIF CSO-D, both available from Cabot Carbon Ltd., Stanlow, South Wirral, UK, or Norit A Supra, from Norit Americas Inc., Atlanta, USA) and 100 weight parts of a 20 wt% platinum, 10 wt% ruthenium catalyst, supported on Cabot Vulcan XC72R (from Johnson Matthey Inc, New Jersey, USA) in 1200 parts of demineralised water. To this is added 10 weight parts of polytetrafluoroethylene (PTFE) as a dispersion in water (ICI Fluon GP1, 64 wt% solids suspension) and the mixture heated and stirred to entrain the PTFE particles within the carbon catalyst materials. The slurry is filtered to remove excess water and re-dispersed in a 2% methyl cellulose solution, using a high shear mixer, to produce a smooth mixture.

The anode electrode may be prepared by applying a layer of the carbon/catalyst slurry described above to a pre-teflonated (18% by weight ICI Fluon GP1), rigid conducting carbon fibre paper substrate (Toray TGP-H-090, available from Toray Industries Inc, Tokyo, Japan) at an electrode platinum loading of 0.4mg/cm$^2$ of electrode geometric area. The dried electrode is heated to 375°C in air to sinter the PTFE

A solution of perfluorosulphonic acid in the aqueous form as described in EP 0 731 520 is applied to the surface of the catalyst layer to provide a proton conductive interface with the electrocatalyst and to act as a water reservoir for the carbon corrosion process .

An electrode so prepared may form the anode of an MEA. The cathode may be of the more conventional type, currently widely employed in the PEMFC. These comprise a conventional pre-teflonated rigid conducting carbon fibre paper substrate (Toray TGP-H-090, available from Toray Industries Inc, Tokyo, Japan) to which is applied a layer of a 40 wt% platinum, catalyst, supported on Cabot Vulcan XC72R (from Johnson Matthey Inc, New Jersey, USA), at an electrode platinum loading of 0.6 mg/cm$^2$ of electrode geometric area. The catalyst layer material is provided by dispersing 100 weight parts of a 40 wt % platinum catalyst, supported on carbon black (Johnson Matthey High-Spec 4000) in 30 parts of a 95% dispersion of Nafion EW1100 (E I DuPont De Nemours & Co.) in water, prepared according to methods described in EPA 731,520. The particulate catalyst is dispersed using a high shear mixer to produce a smooth mixture and is then applied to the cathode substrate. The complete MEA is fabricated by bonding the anode and the cathode electrodes (with the face of the electrode comprising the platinum catalyst component adjacent to the membrane) to a Nafion 112 membrane (supplied by E I DuPont De Nemours, Fayetteville, NC, USA)

The MEA thus formed may be tested in a cell reversal situation according to the following procedure. The MEA is conditioned prior to voltage reversal by operating it normally at a current density of about 0.5A/cm$^2$ and a temperature of approximately 75°C. Humidified hydrogen may be used as fuel and humidified air as oxidant, both at 200 kPa pressure. The stoichiometry of the reactants (that is, the ratio of reactant supplied to reactant consumed in the generation of electricity) may be 15 and 2 for the hydrogen and oxygen-containing air reactants, respectively. The output cell voltage as a function of current density (polarisation data) is determined. After that, each cell is subjected to a voltage reversal test by flowing humidified nitrogen over the anode (instead of fuel) while forcing 10A current through the cell for a period of time long enough to cause some damage to a conventional anode without causing the extensive damage associated with large increases in the anode potential (23 minutes has been found to be an appropriate length of time) using a constant current power supply connected across the fuel cell. During the voltage reversal, the cell voltage versus time is recorded. Polarisation data for each cell is obtained once the cell has returned to normal stabilised operating conditions to determine the effect of a single reversal episode on cell performance.

Then each cell is subjected to a second voltage reversal test at a 10A current. This time, however, the reversal current is interrupted five times during the test period to observe the effect of repeated reversals on the cells. After 5 minutes of operation in reversal, the current is cycled on and off five times (20 seconds off and 10 seconds on) after which the current is left on until a total "on" time of 23 minutes has been reached. Following the second reversal test, polarisation measurements of each cell are obtained.

The above procedure for cell testing can be used not only for the three specific example described but for any examples falling within the scope of the present invention. Furthermore, although the examples described above relate to a gas diffusion layer according to the present invention, it is within the ability of those skilled in the art to modify the procedure to relate to a gas diffusion substrate or a catalyst coated membrane of the present invention.

While particular elements, embodiments and applications of the present invention have been shown and described, it will be understood that the invention is not limited thereto since modifications may be made by those skilled in the art without departing from the scope of the present disclosure, particularly in the light of the foregoing teachings.

## Claims

1. An anode structure for a fuel cell having an operating temperature below about 250°C, said anode structure comprising a substrate, a first carbon-based component comprising a first carbon material, and a second carbon component, **characterised in that** said first carbon-based component is not a support for an electrocatalyst and shows little or no resistance to corrosion and said second carbon component is substantially more resistant to corrosion than said first carbon-based component.

2. An anode structure according to claim 1, wherein the anode structure is for a proton-exchange membrane fuel cell (PEMFC).

3. An anode structure according to any preceding claim, wherein the first carbon material has a BET surface area of or in excess of $350 \mathrm{m}^2\mathrm{g}^{-1}$.

4. An anode structure according to any preceding claim, wherein the substrate is a gas diffusion layer.

5. An anode structure according to claim 4, wherein the first carbon-based component is incorporated on or within the gas diffusion layer.

6. An anode structure according to claim 4, wherein the first carbon-based component and the second carbon component are admixed and subsequently applied to the gas diffusion layer.

7. An anode structure according to claim 4 wherein the first carbon based component and the second carbon components are applied to the gas diffusion layer in separate layers.

8. An anode structure according to any one of claims 1 to 3, wherein the substrate is a solid membrane electrolyte.

9. An anode structure according to claim 8, wherein the first carbon-based component and the second carbon components are applied to the solid membrane electrolyte as separate layers.

10. An anode structure according to claim 8, wherein the first carbon-based component and the second carbon components are admixed and subsequently applied to the solid membrane electrolyte.

11. An anode structure according to any preceding claim, wherein the second carbon component acts as a support for an electrocatalyst material.

12. An anode structure according to any one of claims 4 to 7, wherein the second carbon component is a carbon fill for the gas diffusion layer.

13. A membrane electrode assembly comprising an anode structure according to any preceding claim, wherein said MEA is substantially cell reversal tolerant.

14. A fuel cell comprising an MEA according to claim 13.

15. A fuel cell comprising an anode structure according to any one of claims 1 to 12.

16. A method of improving tolerance of a fuel cell to cell reversal, said method comprising incorporating an anode structure according to any one of claims 1 to 12 in said fuel cell.

## Patentansprüche

1. Anodenstruktur für eine Brennstoffzelle, die eine Betriebstemperatur unterhalb etwa 250 °C aufweist, wobei die Anodenstruktur umfasst ein Substrat, eine erste Komponente auf Kohlenstoffbasis, die ein erstes Kohlenstoffmaterial umfasst, und eine zweite Kohlenstoffkomponente,
**dadurch gekennzeichnet, dass** die erste Komponente auf Kohlenstoffbasis nicht einen Träger für einen Elektrokatalysator darstellt und eine geringe oder keine Beständigkeit gegen Korrosion aufweist, und dass die zweite Kohlenstoffkomponente wesentlich beständiger gegen Korrosion ist als die erste Komponente auf Kohlenstoffbasis.

2. Anodenstruktur nach Anspruch 1, bei der es sich um eine Anodenstruktur für eine Protonenaustauschmembran-Brennstoffzelle (PEMFC) handelt.

3. Anodenstruktur nach irgendeinem vorhergehenden Anspruch, in der das erste Kohlenstoffmaterial eine BET-Oberflächengröße von $\geq 350$ m$^2$/g aufweist,

4. Anodenstruktur nach irgendeinem vorhergehenden Anspruch, in der das Substrat eine Gasdiffusionsschicht ist.

5. Anodenstruktur nach Anspruch 4, in der die erste Komponente auf Kohlenstoffbasis auf eine Gasdiffusionsschicht aufgebracht ist oder in die Gasdiffusionsschicht eingearbeitet ist.

**6.** Anodenstruktur nach Anspruch 4, in der die erste Komponente auf Kohlenstoffbasis und die zweite Kohlenstoffkomponente miteinander gemischt und anschließend auf die Gasdiffusionsschicht aufgebracht worden sind.

**7.** Anodenstruktur nach Anspruch 4, in der die erste Komponente auf Kohlenstoffbasis und die zweite Kohlenstoffkomponente in Form von getrennten Schichten auf die Gasdiffusionsschicht aufgebracht sind.

**8.** Anodenstruktur nach einem der Ansprüche 1 bis 3, in der das Substrat ein fester Membranelektrolyt ist.

**9.** Anodenstruktur nach Anspruch 8, in der die erste Komponente auf Kohlenstoffbasis und die zweite Kohlenstoffkomponente in Form von getrennten Schichten auf den festen Membranelektrolyten aufgebracht sind.

**10.** Anodenstruktur nach Anspruch 8, in der die erste Komponente auf Kohlenstoffbasis und die zweite Kohlenstoffkomponente miteinander gemischt und anschließend auf den festen Membranelektrolyten aufgebracht worden sind.

**11.** Anodenstruktur nach irgendeinem vorhergehenden Anspruch, in der die zweite Kohlenstoffkomponente als Träger für ein Elektrokatalysatormaterial dient.

**12.** Anodenstruktur nach einem der Ansprüche 4 bis 7, in der die zweite Kohlenstoffkomponente eine Kohlenstoff-Füllung für die Gasdiffusionsschicht ist.

**13.** Membranelektroden-Anordnung, die eine Anodenstruktur nach einem der vorhergehenden Ansprüche umfasst, wobei die MEA im Wesentlichen tolerant gegenüber einer Zellenumpolung (Spannungsumkehr) ist.

**14.** Brennstoffzelle, die eine MEA nach Anspruch 13 umfasst.

**15.** Brennstoffzelle, die eine Anodenstruktur nach einem der Ansprüche 1 bis 12 umfasst.

**16.** Verfahren zur Erhöhung der Toleranz einer Brennstoffzelle gegen Zellenumpolung (Spannungsumkehr), wobei das Verfahren umfasst die Einarbeitung einer Anodenstruktur nach einem der Ansprüche 1 bis 12 in die Brennstoffzelle,

**Revendications**

**1.** Structure d'anode pour une pile à combustible, possédant une température d'exploitation inférieure à environ 250°C, ladite structure d'anode comprenant un substrat, un premier composant à base de carbone comprenant un premier matériau de carbone, et un deuxième composant en carbone, **caractérisée en ce que** ledit premier composant à base de carbone n'est pas un support pour un électrocatalyseur et montre une faible résistance ou aucune résistance à la corrosion et **en ce que** ledit deuxième composant en carbone est sensiblement plus résistant à la corrosion que ledit premier composant à base de carbone.

**2.** Structure d'anode selon la revendication 1, dans laquelle la structure d'anode est pour une pile à combustible à membrane échangeuse de protons (PEMFC).

**3.** Structure d'anode selon l'une quelconque des revendications précédentes, dans laquelle le premier matériau de carbone possède une surface en BET de ou supérieure à 350 m$^2$.g$^{-1}$.

**4.** Structure d'anode selon l'une quelconque des revendications précédentes, dans laquelle le substrat est une couche de diffusion gazeuse.

**5.** Structure d'anode selon la revendication 4, dans laquelle le premier composant à base de carbone est incorporé sur ou dans la couche de diffusion gazeuse.

**6.** Structure d'anode selon la revendication 4, dans laquelle le premier composant à base de carbone et le deuxième composant en carbone sont mélangés puis appliqués à la couche de diffusion gazeuse.

**7.** Structure d'anode selon la revendication 4, dans laquelle le premier composant à base de carbone et le deuxième composant en carbone sont appliqués à la couche de diffusion gazeuse dans des couches séparées.

**8.** Structure d'anode selon l'une quelconque des revendications 1 à 3, dans laquelle le substrat est un électrolyte à membrane solide.

**9.** Structure d'anode selon la revendication 8, dans laquelle le premier composant à base de carbone et le deuxième composant en carbone sont appliqués à l'électrolyte à membrane solide comme des couches séparées.

**10.** Structure d'anode selon la revendication 8, dans laquelle le premier composant à base de carbone et le deuxième composant en carbone sont mélangés puis appliqués à l'électrolyte à membrane solide.

11. Structure d'anode selon l'une quelconque des revendications précédentes, dans laquelle le deuxième composant en carbone agit comme un support pour un matériau électro-catalyseur.

12. Structure d'anode selon l'une quelconque des revendications 4 à 7, dans laquelle le deuxième composant en carbone est un garnissage de carbone pour la couche de diffusion gazeuse.

13. Assemblage d'électrode à membrane comprenant une structure d'anode selon l'une quelconque des revendications précédentes, dans laquelle ladite électrode à membrane solide (EMS) est sensiblement tolérant à l'inversion de la pile.

14. Pile à combustible comprenant une EMS selon la revendication 13.

15. Pile à combustible comprenant une structure d'anode selon l'une quelconque des revendications 1 à 12.

16. Procédé d'amélioration de la tolérance d'une pile à combustible à l'inversion de la pile, ledit procédé comprenant l'incorporation d'une structure d'anode selon l'une quelconque des revendications 1 à 12 dans ladite pile à combustible.